# EUROPÄISCHE PATENTSCHRIFT

(11) **EP 1 284 053 B1**
(45) Veröffentlichungstag und Bekanntmachung des Hinweises auf die Patenterteilung: **25.01.2006**
(21) Anmeldenummer: 01944952.9
(22) Anmeldetag: 22.05.2001
(51) Int. Cl.: H04B 7/06

(54) **STRAHLFORMUNGSVERFAHREN FÜR DIE ABWÄRTSRICHTUNG IN EINEM FUNK-KOMMUNIKATIONSSYSTEM**
BEAM FORMATION METHOD FOR THE DOWNLINK IN A RADIO COMMUNICATION SYSTEM
PROCEDE DE FORMATION DE FAISCEAU DESTINE AU SENS DESCENDANT DANS UN SYSTEME DE COMMUNICATION RADIO

(30) Priorität: 25.05.2000 DE 10025989
(43) Veröffentlichungstag der Anmeldung: 19.02.2003
(73) Patentinhaber: SIEMENS AKTIENGESELLSCHAFT, 80333 München (DE)
(72) Erfinder: BRUNNER, Christopher, 54516 Wittlich (DE); SEEGER, Alexander, 85622 Feldkirchen (DE)
(86) Internationale Anmeldenummer: PCT/DE2001/001972
(87) Internationale Veröffentlichungsnummer: WO 2001/091326

(56) Entgegenhaltungen:
- DE-A- 19 916 912
- US-A- 5 642 353
- GERLACH D ET AL: "Base station transmitting antenna arrays for multipath environments" SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, Bd. 54, Nr. 1, 1. Oktober 1996 (1996-10-01), Seiten 59-73, XP004013921 ISSN: 0165-1684
- GERLACH D ET AL: "BASE STATION TRANSMITTER ANTENNA ARRAYS WITH MOBILE TO BASE FEEDBACK" PROCEEDINGS OF THE ASILOMAR CONFERENCE. PACIFIC GROVE, NOV. 1 - 3, 1993, NEW YORK, IEEE, US, Bd. 2, 1. November 1993 (1993-11-01), Seiten 1432-1436, XP000438543

## Beschreibung

Die Erfindung betrifft ein Verfahren zur Strahlformung in einem Funk-Kommunikationssystem mit einer Basisstation, deren zugeordnete Antenneneinrichtung mehrere Antennenelemente aufweist, so daß eine räumliche Auflösung bei der Strahlformung möglich ist.

In Funk-Kommunikationssystemen werden Nachrichten (Sprache, Bildinformation oder andere Daten) über Übertragungskanäle mit Hilfe von elektromagnetischen Wellen (Funkschnittstelle) übertragen. Die Übertragung erfolgt sowohl in Abwärtsrichtung (downlink) von der Basisstation zu der Teilnehmerstation, als auch in Aufwärtsrichtung (uplink) von der Teilnehmerstation zur Basisstation.

Signale, die mit den elektromagnetischen Wellen übertragen werden, unterliegen bei ihrer Ausbreitung in einem Ausbreitungsmedium u.a. Störungen durch Interferenzen. Störungen durch Rauschen können u.a. durch Rauschen der Eingangsstufe des Empfängers entstehen. Durch Beugungen und Reflexionen durchlaufen Signalkomponenten verschiedene Ausbreitungswege. Dies hat zum einen die Folge, daß ein Signal mehrfach, jeweils aus unterschiedlichen Richtungen, mit unterschiedlichen Verzögerungen, Dämpfungen und Phasenlagen, am Empfänger ankommen kann, und zum anderen können sich Beiträge des Empfangssignals kohärent mit wechselnden Phasenbeziehungen beim Empfänger überlagern und dort zu Auslöschungseffekten auf einem kurzfristigen Zeitmaßstab (fast fading) führen.

Aus DE 197 12 549 A1 ist bekannt, intelligente Antennen (smart antennas), d. h. Antennenanordnungen mit mehreren Antennenelementen, zu nutzen, um die Übertragungskapazität in Aufwärtsrichtung zu erhöhen. Diese ermöglichen eine gezielte Ausrichtung des Antennengains in eine Richtung, aus der das Aufwärtssignal kommt.

Aus A.J.Paulraj, C.B.Papadias, "Space-time processing for wireless communications", IEEE Signal Processing Magazine, Nov. 1997, S.49-83, sind verschiedene Verfahren zur räumlichen Signaltrennung für Auf- und Abwärtsrichtung bekannt.

Für die Abwärtsrichtung, also von Basisstation zur Teilnehmerstation, treten besondere Schwierigkeiten auf, da die Strahlformung vor der Beeinflussung der übertragenen Signale durch den Funkkanal vorzunehmen ist. Aus R. Schmalenberger, J.J. Blanz, "A comparison of two different algorithms for multi antenna C/I balancing", Proc. 2^{nd} European Personal Mobile Communications Conference (EPMCC), Bonn, Germany, Sept. 1997, S.483-490, ist ein Algorithmus der Strahlformung in Abwärtsrichtung bekannt, wobei ein direkter Ausbreitungspfad (Sichtverbindung) zwischen den Basisstationen und den Teilnehmerstationen und eine iterative Berechnung von Strahlformungsvektoren vorausgesetzt wird. Mit jeder Änderung der Eigenschaften des Übertragungskanals muß die gesamte aufwendige iterative Berechnung wiederholt werden.

Aus DE 198 03 188 A ist ein Verfahren bekannt, wobei eine räumliche Kovarianzmatrix für eine Verbindung von einer Basisstation zu einer Teilnehmerstation bestimmt wird. In der Basisstation wird ein Eigenvektor aus der für die Uplinksignale erhaltenen Kovarianzmatrix berechnet. Im Falle eines FDD-Systems werden die Sendesignale für die Verbindung mit dem erhaltenen Eigenvektor als Strahlformungsvektor gewichtet und Antennenelementen zur Abstrahlung zugeführt.

Anschaulich gesprochen ermittelt dieses Verfahren in einer Umgebung mit Mehrwegausbreitung einen Ausbreitungsweg mit guten Übertragungseigenschaften und konzentriert die Sendeleistung der Basisstation räumlich auf diesen Ausbreitungsweg. Dadurch kann jedoch nicht verhindert werden, daß Interferenzen auf diesem Übertragungsweg kurzfristig zu Signalauslöschungen und somit zu Unterbrechungen der Übertragung führen können.

Die Empfehlungen des 3GPP (3^{rd} Generation Partnership Project, http://www.3gpp.org) sehen deshalb Verfahren vor, bei denen die Teilnehmerstation eine kurzfristige Kanalimpulsantwort hₘ des Kanals vom m-ten Antennenelement zur Teilnehmerstation abschätzt und Gewichtungsfaktoren wₘ berechnet, mit denen das Sendesignal vor Abstrahlung durch das m-te Antennenelement gewichtet werden soll. Entsprechende Konzepte sind auch aus M. Raitola, A. Hottinen und R. Wichmann, "Transmission diversity in wideband CDMA", erschienen in Proc. 49^{th} IEEE Vehicular Technology Conf. Spring (VTC '99 Spring), S. 1545-1549, Houston, Texas 1999, behandelt.

Ein schwerwiegendes Problem dieser Vorgehensweise ist, daß der von der Teilnehmerstation abgeschätzte Vektor der Gewichtungsfaktoren an die Basisstation übertragen werden muß, und daß hierfür gemäß den Empfehlungen des 3GPP nur eine geringe Bandbreite von einem Bit pro Zeitschlitz zur Verfügung steht. Die Vektoren können daher nur grob quantisiert übertragen werden. Wenn sich der Kanal schnell ändert und die Gewichtungen von einem Zeitschlitz zum anderen aktualisiert werden müssen, sind lediglich zwei verschiedene relative Phasenlagen der Antennenelemente einstellbar. Wenn der Kanal sich langsamer ändert und z. B. vier Zeitschlitze zum Übertragen des Vektors zur Verfügung stehen, sind immerhin 16 verschiedene Werte des Vektors darstellbar.

Die bekannten Konzepte stoßen jedoch an ihre Grenzen, wenn die Zahl der Antennenelemente der Basisstation größer als zwei ist, denn die zum Übertragen des Vektors benötigte Bandbreite nimmt mit dessen Komponentenzahl, d. h. mit der Zahl der Antennenelemente zu. Das bedeutet: eine große Zahl von Antennenelementen wäre zwar einerseits wünschenswert, um den Sendestrahl möglichst genau ausrichten zu können, andererseits kann infolge der begrenzten verfügbaren Bandbreite der Gewichtungsvektor nicht so oft aktualisiert werden, wie dies zur Anpassung an das schnelle Fading erforderlich wäre.

Der Erfindung liegt die Aufgabe zugrunde, ein verbessertes Verfahren zur Strahlformung anzugeben, das eine zuverlässigere Formung des Downlink-Strahls erlaubt.

Diese Aufgabe wird durch das erfindungsgemäße Verfahren mit den Merkmalen des Patentanspruchs 1 gelöst.

Vorteilhafte Ausgestaltungen sind Gegenstand von abhängigen Ansprüchen.

Das erfindungsgemäße Verfahren zur Datenübertragung wird in einem Funk-Kommunikationssystem mit einer Basisstation und wenigstens einer Teilnehmerstation eingesetzt. Teilnehmerstationen sind beispielsweise Mobilstationen, so in einem Mobilfunknetz, oder Feststationen, so in sogenannten Teilnehmerzugangs-Netzen zum drahtlosen Teilnehmeranschluß. Die Basisstation weist eine Antenneneinrichtung (smart antenna) mit mehreren Antennenelementen auf. Die Antennenelemente ermöglichen einen gerichteten Empfang bzw. eine gerichtete Sendung von Daten über die Funkschnittstelle.

Die von der Antennenanordnung ausgestrahlten Downlinksignale können die Teilnehmerstation auf unterschiedlichen Ausbreitungswegen erreichen, die jeweils durch eine Laufzeit, eine bevorzugte Ausstrahlungsrichtung und eine Dämpfung gekennzeichnet sind. Dabei ändern sich die Laufzeit und die Ausstrahlungsrichtung in der Praxis nur langsam bzw. gar nicht, wenn Sender und Empfänger unbewegt sind, wohingegen die Dämpfung als aus einem ebenfalls langsam bzw. nicht veränderlichen Anteil und einem durch Phasenfluktuationen auf dem Ausbreitungsweg verursachten schnell veränderlichen Anteil, dem sogenannten Fast Fading, zusammengesetzt angenommen werden kann.

Um eine Unterbrechung der Übertragung von der Basisstation zur Teilnehmerstation durch das Fast Fading zu vermeiden, ist es erforderlich, daß die Basisstation die Fadingverhältnisse an der Teilnehmerstation bei der Strahlformung berücksichtigen kann. Diese sind jedoch nur an der Teilnehmerstation meßbar. Teilnehmerstation und Basisstation müssen sich daher über das Fading in einer Art und Weise verständigen können, die möglichst wenig Bandbreite erfordert. Hierfür ist es gemäß der Erfindung erforderlich, daß zunächst die Verzögerungen unterschiedlicher Ausbreitungswege zwischen Basisstation und Teilnehmerstation erfaßt werden, so daß sie an beiden Stationen bekannt sind. Da die Laufzeit für Uplink und Downlink die gleiche ist, kann deren Erfassung an einem der beiden Signale oder an beiden erfolgen. Die Basisstation erfaßt Herkunftsrichtungen von unterschiedlich verzögerten Beiträgen des Uplinksignals. Diese Herkunftsrichtungen entsprechen den Richtungen, in die jeweils das Downlinksignal abstrahlbar ist, um die Teilnehmerstation mit der geringsten Dämpfung zu erreichen.

Die Teilnehmerstation wiederum bewertet die Empfangsqualität von unterschiedlich verzögerten Beiträgen des Downlinksignals und meldet wenigstens diejenige Verzögerung, deren Beitrag die beste Empfangsqualität aufweist, an die Basisstation. Zur Bewertung der Empfangsqualität können Kriterien wie Empfangssignalstärke, Bitfehlerrate, Ausmaß oder Fehlen von Interferenzen durch Signale anderer Stationen etc. herangezogen werden. Anhand der gemeldeten Verzögerung identifiziert die Basisstation die Herkunftsrichtung, der die gleiche Verzögerung entspricht, und sendet an die Teilnehmerstation gerichtet in diese Herkunftsrichtung.

Wie man sieht, ist es bei diesem Verfahren lediglich erforderlich, einen einzigen Datenwert als Steuerinformation an die Basisstation zu übertragen, um eine Neuausrichtung des Downlink-Strahls steuern zu können. Insbesondere ist die Menge bzw. Bitzahl der zu übertragenden Steuerinformation unabhängig von der Zahl der Antennenelemente der Antenneneinrichtung. Das Verfahren erlaubt daher eine effiziente Steuerung der Strahlformung in Basisstationen mit zahlreichen Antennenelementen, die eine stark gebündelte Abstrahlung und damit die gemeinsame Nutzung eines Kanals durch eine große Zahl von Teilnehmerstationen innerhalb einer gleichen Zelle eines zellularen Mobilfunksystems erlauben.

Falls die Verzögerungen nur von einer der zwei Stationen gemessen werden, ist es erforderlich, sie an die jeweils andere Station zu übertragen. Da die Verzögerungen sich aber im Laufe des Bestehens einer Kommunikation zwischen Teilnehmerstation und Basisstation nur langsam ändern, genügt es, wenn diese Übertragung in Zeitabständen von einigen Sekunden bis Minuten stattfindet, wohingegen die Übertragung der Verzögerung mit der jeweils besten Empfangsqualität von der Teilnehmerstation an die Basisstation um ein Vielfaches häufiger stattfinden muß, um eine wirksame Reaktion auf schnelles Fading zu ermöglichen.

Gemäß einer besonders bevorzugten Ausgestaltung des Verfahrens werden die Verzögerungen der unterschiedlichen Ausbreitungswege von der Basisstation und von der Teilnehmerstation jeweils unabhängig voneinander gemessen. Dies macht eine Übertragung der gemessenen Verzögerungen zwischen den Stationen überflüssig und spart somit Übertragungsbandbreite ein.

Um eine Messung der Verzögerungen durch die Teilnehmerstation zu ermöglichen, ist es zweckmäßig, wenn ein Teil des Downlinksignals ungerichtet abgestrahlt wird, so daß er die Teilnehmerstation auf allen existierenden Ausbreitungswegen erreichen kann, und die Teilnehmerstation die Verzögerungsmessung anhand dieses ungerichteten Teils durchführt. In diesem ungerichtet abgestrahlten Teil sind vorteilhafterweise Trainingssequenzen enthalten, die der Teilnehmerstation bekannt sind und es ihr erleichtern, diese Teile des Downlinksignals zu erkennen und auszuwerten.

Eine weitere Verringerung der von der Teilnehmerstation an die Basisstation für die Strahlformung rückzuübertragenden Datenmenge wird dadurch erreicht, daß die Meldung der Verzögerung, deren Beitrag die beste Empfangsqualität aufweist, nicht etwa durch die Übertragung eines Meßwerts dieser Verzögerung erfolgt, sondern durch die Übertragung eines Index, genauer gesagt einer kleinen ganzen Zahl. Wenn nämlich die Zahl der erfaßten Verzögerungen vorgegeben und begrenzt ist, z.B. auf 2 oder 4, so genügt die Übertragung von 1 bzw. 2 Bits von der Teilnehmerstation an die Basisstation, um dieser die vollständige Information über diejenige Verzögerung zu liefern, die gegenwärtig von der Teilnehmerstation am besten zu empfangen ist.

Die Meldung der Verzögerung, deren Beitrag die beste Empfangsqualität aufweist, erfolgt vorteilhafterweise zyklisch, wobei eine Zuordnung der Indices zu den einzelnen Verzögerungen in Zeitabständen erfolgt, die einer Vielzahl von Zyklen der Meldung der Verzögerung entsprechen.

Um eine Anpassung an unterschiedliche Empfangsbedingungen zu ermöglichen, ist es vorteilhaft, die Zahl der in jedem Zyklus an die Basisstation gemeldeten Verzögerungen variabel zu machen. So ist es bei einer ersten Variante des Verfahrens möglich, genau eine Verzögerung bzw. ihren Index an die Basisstation zu übertragen, die dem gegenwärtig am besten von der Teilnehmerstation empfangenen Beitrag entspricht. Dies erlaubt es der Basisstation, ihre Sendeleistung auf einen einzigen Übertragungsweg zu konzentrieren und so die insgesamt für die Verbindung zu der Teilnehmerstation aufgebrachte Sendeleistung zu minimieren. Dadurch werden auch Störungen anderer Teilnehmerstationen durch das für die betrachtete Teilnehmerstation bestimmte Downlinksignal minimiert. Diese Variante ist insbesondere zweckmäßig, wenn zwischen der Teilnehmerstation und der Basisstation ein direkter Übertragungsweg (Line of Sight-Übertragungsweg) existiert, auf dem keine Signalauslöschung durch schnelles Fading zu befürchten ist. Unter anderen Umständen kann es zweckmäßiger sein, zwei Indices an die Basisstation zu übertragen, die den jeweils zwei am besten zu empfangenden Beiträgen des Downlinksignals entsprechen. Bei dieser zweiten Variante bleibt das Downlinksignal für die Teilnehmerstation empfangbar, auch wenn einer der zwei Übertragungswege von Auslöschung betroffen ist. Denkbar ist ferner eine dritte Variante, bei der zusammen mit dem Index auch eine Information über die relativen Empfangsstärken der den Indices entsprechenden Beiträge von der Teilnehmerstation an die Basisstation übertragen wird. Dies ermöglicht es der Basisstation, die relative Sendeleistung auf den zwei den übertragenen Indices entsprechenden Übertragungswegen flexibel an die von der Teilnehmerstation empfangene Signalstärke anzupassen und so die Gesamtübertragungskapazität des Telekommunikationssystems zu optimieren.

Da bei diesen drei Varianten die Menge der in jedem Zyklus an die Basisstation für die Strahlformung zu übertragenden Steuerinformationen unterschiedlich ist, die in WCDMA-Systemen für diese Rückübertragung zur Verfügung stehende Bandbreite jedoch begrenzt ist, wird man zweckmäßigerweise die Zyklusdauer bei jeder einzelnen Variante entsprechend der rückzuübertragenden Datenmenge unterschiedlich wählen. Wenn man annimmt, daß in einem der Teilnehmerstation zugeteilten Zeitschlitz jeweils ein Bit für die Rückübertragung der Steuerinformation zur Verfügung steht und die Zahl der erfaßten Verzögerungen 4 ist, so bedeuted dies, daß bei der ersten Variante zwei und bei der zweiten Variante vier Zeitschlitze erforderlich sind, um eine vollständige Steuerinformation an die Basisstation zu übermitteln. Im Fall der dritten Variante hängt die zu übertragende Datenmenge von der Auflösung ab, mit der die relativen Stärken der einzelnen Beiträge übertragen werden sollen. Wenn man eine Auflösung von zwei Bits annimmt, so sind vier Bits pro Zyklus zu übertragen, und es ergibt sich eine Zyklusdauer von vier Zeitschlitzen. Diese verschiedenen Varianten können zweckmäßig in einem Funk-Kommunikationssystem als unterschiedliche Betriebsarten implementiert sein, wobei je nach Übertragungsbedingungen zwischen Basisstation und Teilnehmerstation eine der Varianten zum Einsatz kommt.

Um eine einwandfreie Verständigung zwischen der Teilnehmerstation und der Basisstation über die jeweils zu verwendenden Verzögerungen zu gewährleisten, ist es erforderlich, daß die Zuordnung der Indices zu den Verzögerungen bei beiden Stationen die gleiche ist. Falls die Verzögerungen nur bei einer Station gemessen und zu der jeweils anderen übertragen werden, kann diese Zuordnung willkürlich sein. Falls beide Stationen die Verzögerungen unabhängig von einander messen, ist ein gemeinsame Kriterium für die Zuordnung der Indices erforderlich. Bevorzugt ist hier eine Zuordnung in der Reihenfolge abnehmender mittlerer Empfangsqualität. Der Grund, weshalb eine Mittelung der Empfangsqualität vorgeschlagen wird, ist, daß in Folge des jeweils unterschiedlichen Fadings in Uplink und Downlink eine über einen kurzen Zeitraum von einem oder wenigen Zeitschlitzen vorgenommene Bewertung durchaus eine unterschiedliche Reihenfolge der Empfangsqualitäten im Uplink und Downlink ergeben kann. Die Empfangsqualität wird als Kriterium vorgeschlagen, weil eine Indizierung nach der zeitlichen Reihenfolge zu unterschiedlichen Ergebnissen führen kann, falls eine der zwei Stationen einen schwachen Beitrag mit geringer Verzögerung mitzählt, die andere aber nicht. Bei einer Indizierung entsprechend der Reihenfolge der Empfangsqualität hingegen ist ein solches Problem ausgeschlossen.

Ausführungsbeispiele werden nachfolgend anhand der Zeichnung näher erläutert. Es zeigen:
- Fig. 1: ein Blockschaltbild eines Mobilfunknetzes
- Fig. 2: ein Blockschaltbild der Basisstation;
- Fig. 3: ein Ablaufdiagramm des erfindungsgemäßen Verfahrens
- Fig. 4: eine Matrix der Verzögerungen und Herkunftsrichtungen des Uplinksignals und
- Fig. 5: einen Vektor der Verzögerungen des Downlinksignals.

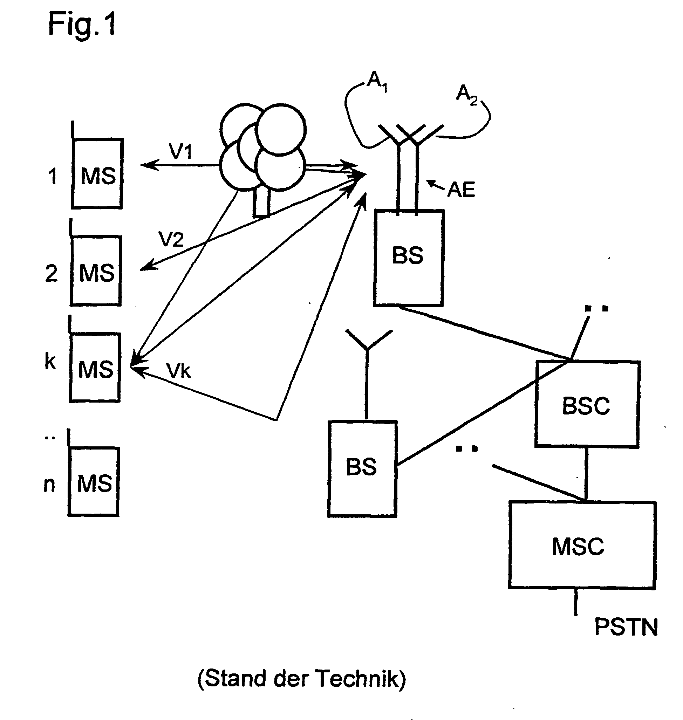

Figur 1 zeigt die Struktur eines Funk-Kommunikationssystems, bei dem das erfindungsgemäße Verfahren anwendbar ist. Es besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS kann über eine Funkschnittstelle eine Nachrichtenverbindung zu Teilnehmerstationen MS aufbauen. Hierfür sind wenigstens einzelne der Basisstationen BS mit Antenneneinrichtungen AE ausgerüstet, die mehrere Antennenelemente (A₁ - A_{M}) aufweisen.

In Fig. 1 sind beispielhaft Verbindungen V1, V2, Vk zur Übertragung von Nutzinformationen und Signalisierungsinformationen zwischen Teilnehmerstationen MS1, MS2, MSk, MSn und einer Basisstation BS dargestellt. Unterschiedliche Übertragungswege der Verbindung Vₖ sind durch Pfeile zwischen der Basisstation BS und der Teilnehmerstation MSk symbolisiert. Ein Operations- und Wartungszentrum OMC realisiert Kontroll- und Wartungsfunktionen für das Mobilfunknetz bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

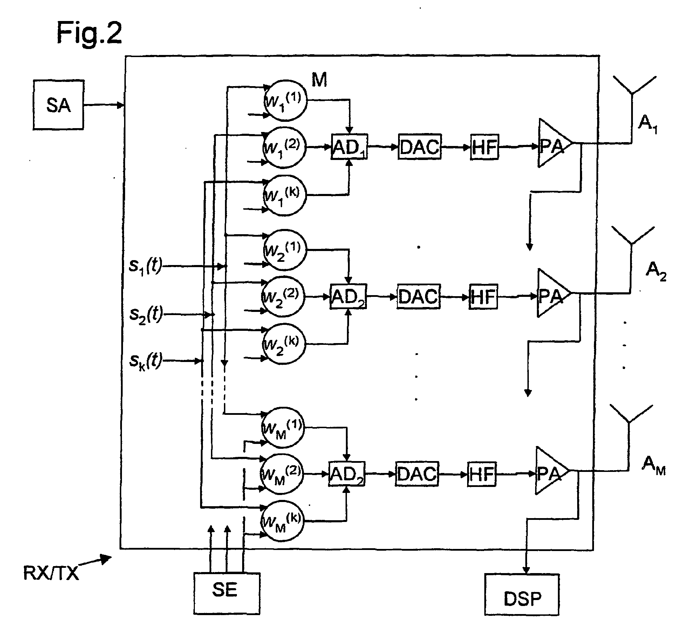

Fig. 2 zeigt schematisch den Aufbau einer Basisstation BS. Eine Signalerzeugungseinrichtung SA stellt das für die Teilnehmerstatiom MSk bestimmte Sendesignal in Funkblöcken zusammen und ordnet es einem Frequenzkanal TCH zu. Eine Sende/Empfangseinrichtung TX/RX empfängt das Sendesignal sₖ(t) von der Signalerzeugungseinrichtung SA. Die Sende/Empfangseinrichtung TX/RX umfaßt ein Strahlformungsnetzwerk, in dem das Sendesignal sₖ(t) für die Teilnehmerstation MSk mit Sendesignalen s1(t), s₂(t), ... verknüpft wird, die für andere Teilnehmerstationen bestimmt sind, denen die gleiche Sendefrequenz zugeordnet ist. Das Strahlformungsnetzwerk umfaßt für jedes Sendesignal und jedes Antennenelement einen Multiplizierer M, der das Sendesignal sₖ(t) mit einer Komponente wₘ^{(k)} eines Gewichtungsvektors w^{(k)} multipliziert, der der empfangenden Teilnehmerstation MSk zugeordnet ist und die Richtcharakteristik des an die Teilnehmerstation MSk abgestrahlten Downlinksignals festlegt. Die Ausgangssignale der jeweils einem Antennenelement Aₘ, m = 1, ..., M zugeordneten Multiplizierer M werden von einem Addierer ADₘ, m = 1,2, ..., M addiert, von einem Digitalanalogwandler DAC analogisiert, auf die Sendefrequenz umgesetzt (HF) und in einem Leistungsverstärker PA verstärkt, bevor sie das Antennenelement A₁, ..., A_{M} erreichen. Eine zu dem beschriebenen Strahlformungsnetz analoge Struktur, die in der Figur nicht eigens dargestellt ist, ist zwischen den Antennenelementen A₁, A₂, ..., A_{M} und einem digitalen Signalprozessor DSP angeordnet, um das empfangene Gemisch von Uplinksignalen in die Beiträge der einzelnen Teilnehmerstationen zu zerlegen und diese getrennt dem DSP zuzuführen.

Eine Speichereinrichtung SE enthält zu jeder Teilnehmerstation MSk einen Satz von Gewichtungsvektoren w^{(k,1)}, w^{(k,2)}, ..., unter denen der von den Multiplizierern M verwendete Gewichtungsvektoren **w**^{**(k)**} ausgewählt ist.

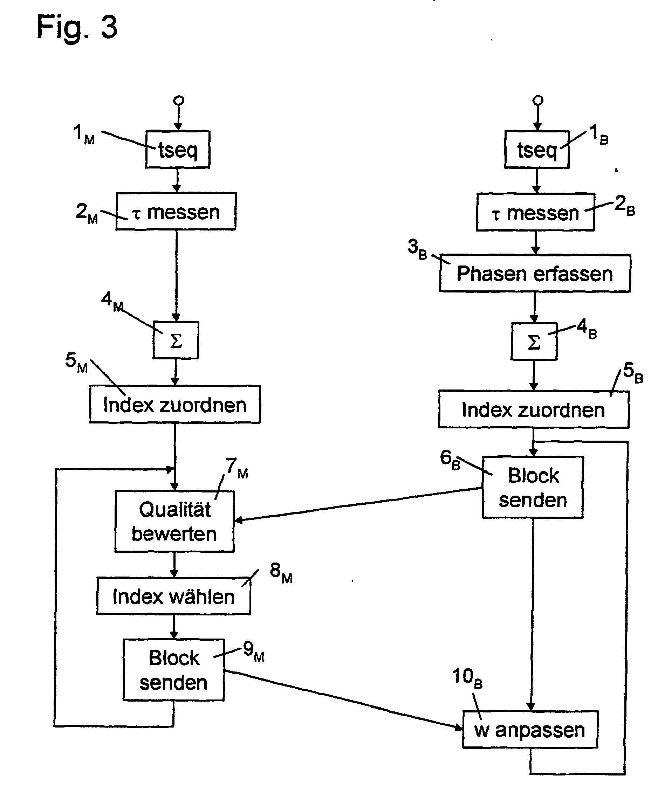

Figur 3 zeigt schematisch den Ablauf des erfindungsgemäßen Verfahrens für die Teilnehmerstation MSk und die Basisstation BS. Die Schritte des Verfahrens sind in der Figur mit Indices M bzw. B versehen, je nachdem, ob sie von der Teilnehmerstation oder von der Basisstation ausgeführt werden. In den Schritten 1_{M}, 1_{B} senden die Teilnehmerstation und die Basisstation Datenblöcke zu der jeweils anderen Station, die der anderen Station bekannte Trainingssequenzen enthalten. Diese Signale erreichen die jeweils andere Station auf diversen Übertragungswegen, die sich in ihrer Signallaufzeit unterscheiden. Ein an sich bekannter Rake Searcher dient dazu, die Verzögerungen der einzelnen Beiträge zu messen. Die von der Teilnehmerstation MSk gesendete Trainingssequenz ist für diese Teilnehmerstation spezifisch und quasiorthogonal zu den Trainingssequenzen, die zeitgleich von anderen von der gleichen Basisstation versorgten Teilnehmerstationen MS1, MS2 ... gesendet werden. Diese Orthogonalität erlaubt es der Basisstation, für jede Verzögerung die Trainingssequenz der Teilnehmerstation MSk im Empfangssignal jedes einzelnen Antennenelements A₁, ... A_{M} unabhängig von den Empfangssignalen der anderen Antennenelemente zu identifizieren und so die relative Phasenlage des Empfangssignals an den verschiedenen Antennenelementen sowie dessen Dämpfung zu bestimmen. Die Gesamtheit der Phasenlagen repräsentiert eine Richtung, aus der das Signal empfangen wird.

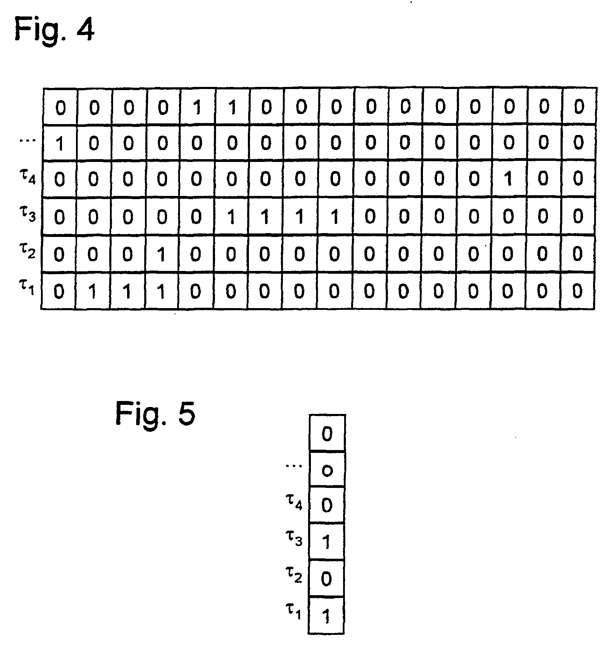

Das Ergebnis der Verzögerungsmessung (Schritt 2_{B}) und der Erfassung der Phasen (Schritt 3_{B}) kann in Form der Matrix der Figur 4 dargestellt werden. In dieser Matrix entspricht jede Zeile einer vom Rake Searcher ermittelten Verzögerung τ₁, τ₂, ... und damit einem Ausbreitungsweg, und jede Spalte entspricht einer Herkunftssrichtung. Diejenigen Kombinationen von Verzögerung und Herkunftsrichtung, für die eine nennenswerte Leistung des Uplinksignals empfangen wurde, sind in der Matrix durch Einsen dargestellt, Kombinationen, denen keine nennenswerte Uplinksignalleistung entspricht, sind durch Nullen gekennzeichnet

Eine entsprechende Messung der Verzögerungen (Schritt 2_{M}) wird auch in der Teilnehmerstation MSk durchgeführt. Das Ergebnis einer solchen Messung kann als Vektor wie in Figur 5 gezeigt dargestellt werden. Hier entspricht jedes Kästchen des Vektors einer Verzögerung, einer Unterscheidung nach Herkunftsrichtungen des Signals ist an der Teilnehmerstation MSk nicht erforderlich.

Die Schritte des Aussendens eines Datenblocks und des Messens der Verzögerungen und, im Falle der Basisstation, des Erfassens der Herkunftsrichtungen, werden für eine Vielzahl von Zeitschlitzen wiederholt, und die erhaltenen Vektoren bzw. Matrizen werden aufaddiert. Dabei ist die für jede einzelne Verzögerung im Falle der Teilnehmerstation bzw. für jede Kombination von Richtung und Verzögerung im Falle der Basisstation erhaltene Summe um so größer, je öfter eine signifikante Übertragungsleistung beobachtet wurde, das heißt je geringer die Dämpfung des entsprechenden Übertragungsweges ist bzw. je weniger dieser von Phasenfluktuationen betroffen ist. In der so erhaltenen Summenmatrix wird in *Schritt* 2_{B} der größte Zählwert jeder Zeile ermittelt, und eine gegebene Zahl, z.B. 4, von Verzögerungen, die den Zeilen mit den größten ermittelten Zählwerten entsprechen, erhalten Indices 1 bis 4 in der Reihenfolge abnehmender Zählwerte zugeordnet. Gewichtungsvektoren, die den Richtungen mit den jeweils größten Zählwerten entsprechen, werden in der Speichereinheit SE abgelegt.

In analoger Weise führt die Teilnehmerstation MSk eine Summation (Schritt 4_{M}) über die erhaltenen Vektoren durch und ordnet in Schritt 5_{M} den vier Verzögerungen, die die höchsten Zählwerte erreicht haben, die Indices 1 bis 4 in der Reihenfolge abnehmender Zählwerte zu.

Da die mittlere Übertragungsqualität in Uplink- und Downlinkrichtung die gleiche ist, ist das Ergebnis dieser Auswertung der Empfangsqualität bei der Teilnehmerstation und der Basisstation das gleiche, d.h. die Indices bezeichnen jeweils gleiche Verzögerungen bei der Teilnehmerstation und der Basisstation, ohne daß beide Stationen sich über die Bedeutung der Indices haben koordinieren müssen.

In der sich nun anschließenden Arbeitsphase des Verfahrens sendet jeweils in Schritt 6_{B} die Basisstation BS einen Datenblock mit einer Trainingssequenz an die Teilnehmerstation MSk, diese bewertet in Schritt 7_{M} die Empfangsqualität der Trainingssequenz für die vier indizierten Verzögerungen und wählt in Schritt 8_{M} den Index derjenigen Verzögerung aus, die den größten Beitrag zum empfangenen Signal leistet. In Schritt 9_{M} wird dieser Index als Teil eines Datenblocks an die Basisstation BS zurückübertragen, die daraufhin den Index aus dem Datenblock extrahiert und gegebenenfalls in Schritt 10_{B} den Gewichtungsvektor anpaßt, um den Downlinkstrahl auf den Übertragungsweg auszurichten, der der von der Teilnehmerstation MSk gemeldeten Verzögerung entspricht. Anschließend kehrt die Basisstation BS zu Schritt 6_{B} zurück, wodurch ein Zyklus der Arbeitsphase abgeschlossen ist.

Bei der den beschriebenen Ausgestaltung des Verfahrens verwendet die Basisstation BS zu jedem Zeitpunkt genau einen Gewichtungsvektor entsprechend einer der indizierten Verzögerungen. Das heißt, daß zu jedem Zeitpunkt die Sendeleistung der Basisstation BS auf einen einzigen Übertragungsweg konzentriert ist. Falls dieser eine Übertragungsweg von einer Auslöschung betroffen ist, kann es zu einer Übertragungsunterbrechung kommen, allerdings nur für die Dauer eines Zyklus, da mit dem Beginn des nachfolgenden Zyklus der Basisstation BS eine aktuelle Information über einen Übertragungsweg zur Verfügung steht, auf dem die Teilnehmerstation MSk gut empfangen kann.

Abwandlungen des Verfahrens erlauben die gleichzeitige Nutzung mehrerer Übertragungswege. Eine erste solche Abwandlung sieht vor, daß in Schritt 8_{M} nicht ein Index der Verzögerung mit dem jeweils stärksten Beitrag zum Empfangssignal ausgewählt wird, sondern die Indices der jeweils zwei stärksten Beiträge, daß diese zwei Indices an die Basisstation übertragen werden und die Basisstation im anschließenden Zyklus auf den zwei diesen Indices entsprechenden Übertragungswegen ausstrahlt. Auf diese Weise ist stets eine Diversität der Übertragungswege gegeben, so daß der Ausfall eines einzelnen von ihnen nicht zur Übertragungsunterbrechung führen kann. Im Falle eines Funk-Kommunikationssystems, dessen Blöcke eine eng begrenzte Übertragungskapazität für die ausgewählten Indices aufweisen, kann es allerdings vorkommen, daß die Indices auf zwei Blöcke verteilt werden müssen, so daß sich die Zyklusdauer des Verfahrens verdoppelt.

Selbstverständlich können auch jeweils drei oder mehr Indices ausgewählt und übertragen werden, die den stärksten Beiträgen zum von der Teilnehmerstation MSk empfangenen Signal entsprechen, sofern dies unter Berücksichtigung der Zahl M der indizierten Verzögerungen zweckmäßig ist.

Eine zweite Abwandlung sieht jeweils die Übertragung eines Index pro Zyklus an die Basisstation vor, allerdings ist die Anpassung des Gewichtungsvektors in Schritt 10_{B} verändert. Anstatt als Gewichtungsvektor jeweils den Vektor zu wählen, der dem zuletzt übertragenen Index entspricht, bildet die Basisstation in Schritt 10_{B} jeweils die Summe der Gewichtungsvektoren, die den zwei zuletzt übertragenen Indices entsprechen. Wenn die Empfangsqualität der einzelnen Beiträge an der Teilnehmerstation nicht fluktuiert, ist das Ergebnis dieser Abwandlung das gleiche wie bei dem zuerst mit Bezug auf Figur 3 beschriebenen Verfahren; falls die Empfangsqualitäten variieren, ergibt sich automatisch eine Diversität der Übertragungswege.

Selbstverständlich kann in Schritt 10_{B} auch eine Summe über mehr Gewichtungsvektoren gebildet werden als die, die den zwei zuletzt übertragenen Indices entsprechen; auch eine gleitende Mittelwertbildung ist denkbar.

Gemäß einer dritten Abwandlung des Verfahrens kann in Schritt 9_{M} nicht nur der Index der jeweils stärksten Beiträge zum Empfangssignal übertragen werden, sondern auch eine Information über deren relative Stärke. Dadurch erhöht sich die Menge der von der Teilnehmerstation an die Basisstation zu übertragenden Steuerinformation, so daß, wenn die pro der Teilnehmerstation zugeteiltem Zeitschlitz übertragbare Menge an Steuerinformationen begrenzt ist, der Zyklus des Verfahrens gegebenenfalls verlängert werden muß, damit die Steuerinformation auf die erforderliche Anzahl von Zeitschlitzen verteilt übertragen werden kann. Zweckmäßig ist diese dritte Abwandlung des Verfahrens insbesondere dann, wenn die Zahl der Ausbreitungswege bzw. Verzögerungen, über deren Verwendung sich Teilnehmerstation und Basisstation verständigen müssen, auf zwei beschränkt ist. In letzterem Fall ist es nämlich für eine vollständige Steuerung der Strahlformung an der Basisstation ausreichend, wenn ein einziger Zahlenwert von der Teilnehmerstation zur Basisstation übertragen wird, der den relativen Anteil einer der zwei Verzögerungen an der Gesamtleistung des von der Basisstation an die Teilnehmerstation ausgestrahlten Downlinksignals beschreibt.

Selbstverständlich sind auch mehrere der oben beschriebenen Varianten kombinierbar. So können z.B. im Falle der zweiten Abwandlung, falls die Zahl der gleichzeitig von der Basisstation verwendeten Verzögerungen bzw. Übertragungswege auf zwei beschränkt ist, in einer ersten Phase des Zyklus die Indices der zu verwendenden Verzögerungen und in einer zweiten Phase ein einziger Verhältniswert zur Festlegung der auf den zwei Ausbreitungswegen auszustrahlenden relativen Leistungen übertragen werden.

Ferner können die oben beschriebenen unterschiedlichen Varianten in einem gleichen Funk-Kommunikationssystem im zeitlichen Wechsel, jeweils angepaßt an die Empfangssituation der Teilnehmerstation, eingesetzt werden. So kann z.B. die mit Bezug auf Figur 3 beschriebene Variante insbesondere dann zum Einsatz kommen, wenn das Funk-Kommunikationssystem feststellt, daß zwischen der Basisstation BS und der Teilnehmerstation MSk ein direkter Übertragungsweg (Line of Sight) besteht. In diesem Fall ist keine Diversität von Übertragungwegen erforderlich, und durch Beschränken der Sendeleistung auf einen einzigen Ausbreitungsweg wird die Gesamtsendeleistung der Basisstation und damit die Gefahr der Störung anderer Kommunikationen durch die Kommunikation zwischen Basisstation BS und Teilnehmerstation MSk minimiert.

Die erste oder zweite Abwandlung hingegen eignen sich besonders für Empfangssituationen mit schnellem Fading, wo für den Fall, daß auf einem der Übertragungswege eine Auslöschung stattfindet, wenigstens ein redundanter Übertragungsweg vorhanden sein muß, um eine vollständige Unterbrechung der Kommunikation zu vermeiden.

Eine Diversität von Übertragungswegen besteht auch bei der dritten Variante. Diese hat den Vorteil, daß sie durch die Leistungsregelung auf den verschiedenen Ausbreitungswegen einerseits eine Minimierung der Gesamtsendeleistung der Basisstation und andererseits eine Optimierung des Signal-Störverhältnisses an der Teilnehmerstation MSk zuläßt. Infolge der relativ großen Zykluslänge eignet sich diese Variante besonders für Teilnehmerstationen, die sich nicht oder langsam bewegen, wie etwa Mobiltelefone, die von Fußgängern gehandhabt werden.

## Patentansprüche

1. Verfahren zur Strahlformung in einem Funk-Kommunikationssystem mit wenigstens einer Teilnehmerstation (MSk,MS1 bis MSn) und einer Basisstation (BS), die eine Antenneneinrichtung (AE) mit mehreren Antennenelementen (A₁ bis A_{M}) aufweist, die ein Downlinksignal abstrahlen und ein Uplinksignal von der Teilnehmerstation empfangen, **dadurch gekennzeichnet, daß**
a) die Verzögerungen unterschiedlicher Ausbreitungswege zwischen Basisstation (BS) und Teilnehmerstation (MSk) erfaßt werden,
b) die Basisstation (BS) Herkunftsrichtungen von unterschiedlich verzögerten Beiträgen des Uplinksignals erfaßt,
c) die Teilnehmerstation (MSk) die Empfangsqualität von unterschiedlich verzögerten Beiträgen des Downlinksignals bewertet und wenigstens diejenige Verzögerung, deren Beitrag die beste Empfangsqualität aufweist, an die Basisstation (BS) meldet, und daß
d) die Basisstation (BS) an die Teilnehmerstation (MSk) in die Herkunftsrichtung desjenigen Beitrags des Uplinksignals sendet, dessen Verzögerung der gemeldeten Verzögerung entspricht.

2. Verfahren nach Anspruch 1, **dadurch gekennzeichnet, daß** die Verzögerungen der unterschiedlichen Ausbreitungswege von der Basisstation (BS) anhand des Uplinksignals gemessen und an die Teilnehmerstation übertragen werden.

3. Verfahren nach Anspruch 1, **dadurch gekennzeichnet, daß** die Verzögerungen der unterschiedlichen Ausbreitungswege von der Teilnehmerstation anhand des Downlinksignals gemessen und an die Basisstation übertragen werden.

4. Verfahren nach Anspruch 1, **dadurch gekennzeichnet, daß** die Verzögerungen der unterschiedlichen Ausbreitungswege von der Basisstation (BS) und unabhängig davon von der Teilnehmerstation (MSk) gemessen werden.

5. Verfahren nach Anspruch 3 oder 4, **dadurch gekennzeichnet, daß** die Erfassung von Verzögerungen des Downlinksignals anhand von Teilen des Downlinksignals erfolgt, die von der Basisstation (BS) ungerichtet abgestrahlt werden.

6. Verfahren nach Anspruch 5, **dadurch gekennzeichnet, daß** die ungerichtet abgestrahlten Teile des Downlinksignals Trainingssequenzen sind, die der Teilnehmerstation (MSk) bekannte Symbole enthalten.

7. Verfahren nach einem der vorhergehenden Ansprüche, **dadurch gekennzeichnet, daß** jeder erfaßten Verzögerung ein Index zugeordnet wird, und daß die Meldung der Verzögerung, deren Beitrag die beste Empfangsqualität aufweist, durch Übertragung des Index von der Teilnehmerstation (MSk) an die Basisstation (BS) erfolgt.

8. Verfahren nach Anspruch 7, **dadurch gekennzeichnet, daß** die Meldung der Verzögerung, deren Beitrag die beste Empfangsqualität aufweist, zyklisch erfolgt, und daß die Zuordnung der Indices in Zeitabständen erfolgt, die einer Vielzahl von Zyklen der Meldung der Verzögerung entsprechen.

9. Verfahren nach Anspruch 8, **dadurch gekennzeichnet, daß** die Zahl der in jedem Zyklus gemeldeten Verzögerungen variabel ist.

10. Verfahren nach Anspruch 9, **dadurch gekennzeichnet, daß** die Dauer eines Zyklus proportional zur Zahl der in dem Zyklus gemeldeten Verzögerungen ist.

11. Verfahren nach einem der Ansprüche 8 bis 10, **dadurch gekennzeichnet, daß** die Teilnehmerstation zu jeder Verzögerung ein Maß für die zu verwendende Sendeleistung auf dem der Verzögerung entsprechenden Übertragungsweg an die Basisstation überträgt.

12. Verfahren nach Anspruch 11, **dadurch gekennzeichnet, daß** das Maß für die zu verwendende Sendeleistung die von der Teilnehmerstation (MSk) auf dem entsprechenden Übertragungsweg empfangene Leistung ist.

13. Verfahren nach einem der vorhergehenden Ansprüche, **dadurch gekennzeichnet, daß** die Indices den Verzögerungen jeweils in der Reihenfolge abnehmender mittlerer Empfangsqualität zugeordnet werden.

## Claims

1. Method for beam formation in a radio communication system comprising at least one subscriber station (MSk, MS1 to MSn) and one base station (BS), having an antenna system (AE) with several antenna elements (A₁ to A_{M}) which emit a downlink signal and receive an uplink signal from the subscriber station,
**characterized in that**
a) the delays of different propagation routes between base station (BS) and subscriber station (MSk) are detected,
b) the base station (BS) detects the source directions of varying delayed components of the uplink signal,
c) the subscriber station (MSk) evaluates the reception quality of varying delayed components of the download signal and informs the base station (BS) of at least the delay whose component has the best reception quality, and that
d) the base station (BS) transmits to the subscriber station (MSk) in the source direction of the uplink signal component whose delay corresponds to the delay indicated.

2. Method in accordance with claim 1, **characterized in that** the delays in the different propagation routes from the base station (BS) are measured on the basis of the uplink signal and are transmitted to the subscriber station.

3. Method in accordance with claim 1, **characterized in that** the delays in the different propagation routes from the subscriber station are measured on the basis of the downlink signal and are transmitted to the base station.

4. Method in accordance with claim 1, **characterized in that** the delays in the different propagation routes from the base station (BS) and independently thereof from the subscriber station (MSk) are measured.

5. Method in accordance with claim 3 or 4, **characterized in that** the detection of delays in the downlink signal is performed on the basis of parts of the downlink signal which are emitted from the base station (BS) on an undirected basis.

6. Method in accordance with claim 5, **characterized in that** the parts of the downlink signal emitted on an undirected basis are training sequences which contain symbols known to the subscriber station (MSk).

7. Method in accordance with one of the preceding claims, **characterized in that** an index is assigned to each detected delay, and that the notification of the delay whose component has the best reception quality is effected by transmitting the index from the subscriber station (MSk) to the base station (BS).

8. Method in accordance with claim 7, **characterized in that** the notification of the delay whose component has the best reception quality is effected cyclically, and that the assignment of the indices takes place at intervals in time which correspond to a plurality of cycles of the notification of the delay.

9. Method in accordance with claim 8, **characterized in that** the number of the delays notified in each cycle is variable.

10. Method in accordance with claim 9, **characterized in that** the duration of a cycle is proportional to the number of the delays notified in the cycle.

11. Method in accordance with one of claims 8 to 10, **characterized in that** for each delay the subscriber station transmits to the base station a measure for the transmission power to be used on the transmission route corresponding to the delay.

12. Method in accordance with claim 11, **characterized in that** the measurement for the transmission power to be used is the power received from the subscriber station (MSk) on the corresponding transmission route.

13. Method in accordance with one of the preceding claims, **characterized in that** the indices are assigned to the delays in each case in the sequence of decreasing average reception quality.

## Revendications

1. Procédé pour la formation de faisceau dans un système de communication radio comprenant au moins une station d'abonné (MSk, MS1 à MSn) et une station de base (BS), qui présente un dispositif d'antenne (AE) comprenant plusieurs éléments d'antenne (A₁ jusqu'à A_{M}), qui émettent un signal de liaison descendante et reçoivent un signal de liaison ascendante de la station d'abonné, **caractérisé en ce que**
a) les temporisations de différents trajets de propagation entre la station de base (BS) et la station d'abonné (MSk) sont enregistrées,
b) la station de base (BS) saisit des directions d'origine de contributions, temporisées différemment, du signal de liaison ascendante,
c) la station d'abonné (MSk) évalue la qualité de réception de contributions, temporisées différemment, du signal de liaison descendante et signale au moins la temporisation, dont la contribution présente la meilleure qualité de réception, à la station de base (BS), et **en ce que**
d) la station de base (BS) envoie à la station d'abonné (MSk) dans la direction d'origine de la contribution du signal de liaison ascendante, dont la temporisation correspond à la temporisation signalée.

2. Procédé selon la revendication 1, **caractérisé en ce que** les temporisations des différents trajets de propagation sont mesurées par la station de base (BS) à l'aide du signal de liaison ascendante et sont transmises à la station d'abonné.

3. Procédé selon la revendication 1, **caractérisé en ce que** les temporisations des différents trajets de propagation sont mesurées par la station d'abonné à l'aide du signal de liaison descendante et sont transmises à la station de base.

4. Procédé selon la revendication 1, **caractérisé en ce que** les temporisations des différents trajets de propagation sont mesurées par la station de base (BS) et indépendamment de cela par la station d'abonné (MSk).

5. Procédé selon la revendication 3 ou 4, **caractérisé en ce que** l'enregistrement des temporisations du signal de liaison descendante s'effectue à l'aide de parties du signal de liaison descendante, qui sont émises sans direction par la station de base (BS).

6. Procédé selon la revendication 5, **caractérisé en ce que** les parties émises sans direction du signal de liaison descendante sont des séquences d'entraînement qui contiennent des symboles connus à la station d'abonné (MSk).

7. Procédé selon l'une quelconque des revendications précédentes, **caractérisé en ce qu'**un indice est attribué à chaque temporisation enregistrée et **en ce que** le signalement de la temporisation, dont la contribution présente la meilleure qualité de réception, s'effectue par transmission de l'indice de la station d'abonné (MSk) à la station de base (BS).

8. Procédé selon la revendication 7, **caractérisé en ce que** le signalement de la temporisation, dont la contribution présente la meilleure qualité de réception, s'effectue de façon cyclique, et **en ce que** l'attribution des indices intervient à des intervalles de temps qui correspondent à une pluralité de cycles du signalement de la temporisation.

9. Procédé selon la revendication 8, **caractérisé en ce que** le nombre des temporisations signalées dans chaque cycle est variable.

10. Procédé selon la revendication 9, **caractérisé en ce que** la durée d'un cycle est proportionnelle au nombre des temporisations signalées dans le cycle.

11. Procédé selon l'une quelconque des revendications 8 à 10, **caractérisé en ce que** la station d'abonné transmet pour chaque temporisation une mesure pour la puissance d'émission à utiliser sur le trajet de transmission correspondant à la temporisation à la station de base.

12. Procédé selon la revendication 11, **caractérisé en ce que** la mesure pour la puissance d'émission à utiliser est la puissance reçue de la station d'abonné (MSk) sur le trajet de transmission correspondant.

13. Procédé selon l'une quelconque des revendications précédentes, **caractérisé en ce que** les indices sont attribués aux temporisations respectivement dans l'ordre de qualité de réception moyenne décroissante.
